# EUROPÄISCHE PATENTSCHRIFT

(11) **EP 2 202 087 B1**
(45) Veröffentlichungstag und Bekanntmachung des Hinweises auf die Patenterteilung: **13.03.2013**
(21) Anmeldenummer: 09015798.3
(22) Anmeldetag: 21.12.2009
(51) Int. Cl.: B42D 15/00, B42D 15/10, C09J 7/02, C09J 11/08, G09F 3/02

(54) **Sicherheitselement mit verbessertem Heißsiegelklebstoff**
Safety element with improved heat seal adhesive
Elément de sécurité doté d'un adhésif thermocollant amélioré

(30) Priorität: 23.12.2008 DE 102008062938; 06.07.2009 DE 102009031877
(43) Veröffentlichungstag der Anmeldung: 30.06.2010
(73) Patentinhaber: Giesecke & Devrient GmbH, 81677 München (DE)
(72) Erfinder: Hoffmüller, Winfried, 83646 Bad Tölz (DE); Renner, Patrick, 83677 Reichersbeuern (DE); Fleidl, Roland, 83714 Miesbach (DE)

(56) Entgegenhaltungen:
- EP-A1- 1 942 131
- WO-A1-02/055295
- WO-A1-03/011584
- WO-A1-2006/005434
- JP-A- 2003 186 401

## Beschreibung

Die Erfindung betrifft ein Verfahren zur Herstellung eines Sicherheitspapiers oder Wertdokuments.

Wertgegenstände, wie etwa Markenartikel oder Wertdokumente, werden zur Absicherung oft mit Sicherheitselementen ausgestattet, die eine Überprüfung der Echtheit des Wertgegenstandes gestatten und die zugleich als Schutz vor unerlaubter Reproduktion dienen. Wertgegenstände im Sinne der vorliegenden Erfindung sind insbesondere Banknoten, Aktien, Ausweise, Kreditkarten, Anleihen, Urkunden, Gutscheine, Schecks, Versichertenkarten und sonstige fälschungsgefährdete Dokumente und Karten, sowie Produktsicherungselemente, wie Etiketten, Siegel, Verpackungen, hochwertige Produkte, wie Markenartikel und dergleichen. Der Begriff "Wertgegenstand" schließt im folgenden alle derartigen Gegenstände, Dokumente und Produktsicherungsmittel ein. Unter "Sicherheitspapier" wird eine noch nicht umlauffähige Vorstufe zu einem Wertdokument verstanden, die neben dem Sicherheitselement weitere Echtheitsmerkmale aufweisen kann. Sicherheitspapier liegt üblicherweise als Endlosmaterial vor und wird zu einem späteren Zeitpunkt weiter verarbeitet.

Die Ausstattung von Sicherheitspapieren und Wertdokumenten mit Sicherheitselementen erfolgt häufig durch Aufkleben des Sicherheitselements, beispielsweise eines Folienpatches oder eines Sicherheitsstreifens, mittels eines Heißsiegelklebstoffs auf eine Oberfläche des Sicherheitspapiers oder Wertdokuments. Auch bei einer Einlagerung von Sicherheitselementen ins Innere eines Papiers oder eines Kartenmaterials wird häufig ein Heißsiegelklebstoff verwendet, um eine bessere Verankerung des Sicherheitselements am Substrat zu erzielen. Heißsiegelklebstoffe werden insbesondere auch gerne zur Aufbringung von Hologrammpatches und von Sicherheitselementen, die durchgehende Öffnungen in dem zu sichernden Gegenstand abdecken sollen, eingesetzt.

Beim Aufbringen von Sicherheitselementen mit Hilfe von Heißsiegelklebstoffen wird mindestens eines der zu verbindenden Substrate, d. h. der zu schützende Gegenstand und/ oder das Sicherheitselement, mit einer Polymerlösung auf Lösungsmittelbasis oder einer wässrigen Lösung oder Dispersion eines Polymers beschichtet. Nach physikalischer Trocknung, d. h. nach Verdunsten oder Wegschlagen des Lösungsmittels/ Dispersionsmittels, liegt eine siegelfähige Masse vor, die bei Einwirkung von Druck und erhöhter Temperatur aufschmilzt und als Klebstoff wirkt. Die Temperatur, bei der der Heißsiegelvorgang durchgeführt wird, ist die "Heißsiegeltemperatur". Sogenannte Schmelzklebstoffe werden ohne Lösungsmittel bzw. Dispersionsmittel aufgetragen. Nach dem Abkühlen bilden sie eine feste Beschichtung, die bei erneuter Erwärmung und Druckeinwirkung als Klebstoff wirkt. Nach der physikalischen Trocknung bzw. nach dem Abkühlen liegt eine klebfreie Oberfläche vor.

Derartige Heißsiegelklebstoffe sind in US-A-4 758296 offenbart. Hier wird ein Prägehologramm mittels einer Heißschmelzkleberschicht, die unter Einwirkung von Wärme und Druck aktiviert wird, auf ein Wertdokument transferiert. Nachteilig an dem offenbarten Verfahren ist, dass beim Aufschmelzen des Klebstoffs hohe Temperaturen erforderlich sind, wodurch das Substrat des Wertdokuments geschädigt werden kann, und dass das Sicherheitselement bei entsprechend hoher Temperatur von dem Wertdokument auch wieder abgelöst werden kann. Dies kann zu einer unbeabsichtigten Beschädigung des Wertdokuments führen, beispielsweise durch versehentliches Mitwaschen einer Banknote in der Waschmaschine, und es ermöglicht auch Fälschungen durch Übertragen des Sicherheitselements auf einen anderen Gegenstand.

Als beständigere Alternative werden zum Verkleben von Sicherheitselementen auch strahlenhärtbare Klebstoffe verwendet. Diese Klebstoffe werden ohne Lösungsmittel (als sogenanntes 100%-System) flüssig aufgetragen und kurz vor, während oder unmittelbar nach dem Zusammenführen von Sicherheitselement und Wertgegenstand durch Strahlung, insbesondere durch UV-Strahlung oder Elektronenstrahlung, vernetzt. Derartige Systeme sind beispielsweise in WO 93/05124 und in WO 94/19201 offenbart.

Diese 100%-Systeme enthalten toxikologisch bedenkliche, niedermolekulare Verbindungen als Reaktivverdünner, die sich durch Wegschlagen ins Papier der Härtung mittels UV-Strahlung entziehen können. Insbesondere weisen die flüssigen strahlenhärtenden Systeme auch noch den Nachteil auf, dass sie nicht offline aufgetragen werden können, da die beschichteten Materialien sofort miteinander verkleben würden.

Es ist jedoch wünschenswert, applikationsfertige Sicherheitselemente herzustellen und zu bevorraten. In der Praxis sollen Sicherheitselemente, bzw. Bögen oder Bahnen mit einer Vielzahl von Sicherheitselementen, mit einem Heißsiegelklebstoff beschichtet werden, auf Lager gehalten, und bei Bedarf mit einem Substrat zur Herstellung eines Sicherheitspapiers oder eines Wertdokuments verbunden werden.

Die Bevorratung von Sicherheitselementen erfordert, dass die Sicherheitselemente ohne Schmelzpunktänderung des Heißsiegelklebstoffs gelagert werden können und gestapelt oder aufgewickelt werden können, ohne miteinander zu verkleben.

Zur Lösung dieses Problems wird in WO 2006/005434 ein Sicherheitselement vorgeschlagen, das mit einer bei Raumtemperatur im wesentlichen tackfreien Beschichtung ausgestattet ist, wobei die Beschichtung wenigstens eine strahlenvernetzbare Komponente enthält. "Im wesentlichen tackfrei" bedeutet auch im wesentlichen klebfrei im Sinne einer glatten, im wesentlichen nicht klebrigen Oberfläche. Die Überprüfung kann dabei durch folgenden Test erfolgen: Beschichtete Folienstücke von etwa 100 cm² werden gestapelt und mit einem Gewicht von 10 kg belastet und 72 Stunden lang bei 40° C gelagert. Lassen sich die Folienstücke danach ohne Beschädigung der Beschichtung mühelos voneinander trennen, ist die Beschichtung als im wesentlichen tackfrei anzusehen.

Die Beschichtung gemäß WO 2006/005434 kann in Form einer Lösung, einer Emulsion oder in Form einer Dispersion aufgetragen werden. Die in dieser Form aufgetragene strahlenvernetzbare Beschichtung dringt in das Substrat ein, was zu einer leichten Verarbeitbarkeit führt. Im unvernetzten Zustand ist das Beschichtungssystem vergleichsweise niedrigschmelzend, nach Vernetzung durch Bestrahlung jedoch vergleichsweise hochschmelzend, wodurch eine gute Stabilität und Heißwasserbeständigkeit erreicht werden.

Neben strahlenvernetzbaren Heißsiegelklebstoffen kommt als weiteres latent reaktives System auch der Einsatz von thermisch aktivierbaren Vernetzern infrage. Hierbei handelt es sich in der Regel um chemisch geblockte oder um sterisch gehinderte Isocyanate. Bei diesen sterisch gehinderten Isocyanaten handelt es sich um oberflächendesaktivierte Feststoff-Isocyanate oder um mikroverkapselte Isocyanate. Diese thermisch aktivierbaren Vernetzer sind unterhalb ihrer Aktivierungstemperatur gegenüber dem umgebenden Bindemittel inert. Bei den chemisch geblockten Isocyanaten erfolgt die Abspaltung des Blockungsmittels durch Temperatureinwirkung, in Abhängigkeit von der jeweiligen Kombination von Isocyanat-Typ und Blockungsmittel, ab ungefähr 100°C bis zu einer Temperatur ungefähr 160°C. Die Aktivierung der sterisch gehinderten Isocyanate kann ebenfalls durch Temperatureinwirkung erfolgen, ab etwa 70°C bei aromatischen Isocyanaten, ab etwa 100°C bei aliphatischen Isocyanaten. Die höchsten Aktivierungstemperaturen liegen hier ebenfalls bei bis zu 160°C. Die sterisch gehinderten Isocyanate können im Gegensatz zu den chemisch geblockten Typen aber auch durch Druck, Scherung oder in Anwesenheit von Lösungsmitteln oder Weichmachern aktiviert werden. Als Bindemittel werden modifizierte Polyester und Acrylsäure-Styrol-Copolymere bevorzugt, besonders bevorzugt werden Bindemittel auf Basis von Polyurethan.

Als Vernetzer sind neben den Isocyanaten auch mikroverkapselte thermische Radikalstarter denkbar, wie zum Beispiel Azobisisobutyronitril (AIBN) oder Dibenzoylperoxid (DBPO). Sie sind geeignet für Bindemittel, die sonst bei Zugabe eines Photoinitiators durch UV-Strahlung vernetzt werden können. Mit AIBN und DBPO kann die Vernetzung jedoch rein thermisch ausgelöst werden.

Es ist jedoch schwierig, mit den offenbarten Klebstoffsystemen bei allen geforderten Eigenschaften gleichzeitig gute Ergebnisse zu erzielen. Insbesondere dann, wenn die Klebstoffzusammensetzung so gewählt wird, dass der Schmelzpunkt möglichst niedrig ist, ist die Tackfreiheit meist unbefriedigend. Dies liegt insbesondere daran, dass niedrige Schmelzpunkte nicht die Verwendung sehr hochmolekularer Verbindungen zulassen, Tackfreiheit aber hochmolekulare Verbindungen erfordert.

Eine Möglichkeit, die Tackfreiheit zu verbessern und dabei den Schmelzpunkt niedrig zu halten, besteht im Zusatz von Antiblockmitteln bzw. "Abstandhaltern". Abstandhalter dienen dazu, in der Produktionsphase von Sicherheitselementen und während ihrer Lagerung ein Verblocken bzw. Verkleben der Rollen- oder Bogenware zu verhindern. Abstandhalter sind Feststoffe, die an der Oberfläche der Klebstoffschicht eine Mikrorauigkeit erzeugen und dadurch beim Aufeinanderlegen der Rollen- oder Bogenware eine hauchdünne Luftschicht als Trennschicht bilden. Es sind in der Regel bei Raumtemperatur feste, unreaktive Wachse wie Polyethylen, Polyvinylchlorid, Polytetrafluorethylen-Wachse und Kieselgele (SiOₓ) oder Metalloxide wie Aluminiumoxid in Form von Pulvern oder Nanopartikeln. Es gibt auch flüssige oberflächenaktive Additive wie silikonhaltige Additive als Antiblockhilfsmittel (erhältlich von den Firmen Byk, Tego oder Efka). Ebenfalls infrage kommen Kunststoffpartikel aus Polymethylmethacrylat, Polyamid oder nicht reaktivem Polyurethan. Diese Kunststoffpartikel können sowohl kugelförmig als auch von undefinierter Form sein. Leider hat ein Zusatz derartiger Antiblockmittel auch Nachteile: Sie führen zu einer Trübung der Klebstoffschicht, die auch nach dem Heißsiegeln noch zu sehen ist, verschlechtern die Haftung zwischen Sicherheitselement und zu sicherndem Wertgegenstand, und führen häufig auch zu Verlaufstörungen und/oder einem Aufschäumen während des Auftragens der Klebstoffbeschichtung. Die Verringerung der Haftung ist sehr nachteilig im Hinblick auf Beständigkeit und Fälschungssicherheit, und die Verschlechterung der Transparenz wirkt sich insbesondere dann nachteilig aus, wenn das Sicherheitselement zum Abdecken einer durchgehenden Öffnung in einem Wertdokument genutzt werden soll.

Die Schrift WO 02/055295 A1 (= D1) beschreibt ein heißsiegelfähiges Laminat, das Antiblock-Additive aufweist (siehe S. 13, letzter Absatz). Die Antiblock-Additive enthalten feste Pellets, die Silikat, keramische Mikrokügelchen und Polyethylen von niedriger Dichte enthalten (siehe S. 13, Zeilen 20-23).

Die Schrift JP 2003 186 401 A beschreibt ein für eine Flasche geeignetes Etikett ("label"), das eine farbige Zusammensetzung ("ink composition") aufweist. Die Zusammensetzung enthält unter anderem Materialien mit einer bestimmten Härte. In Absatz [0033] werden polymere Stoffe erwähnt.

Aufgabe der vorliegenden Erfindung ist es, ein mit einen Sicherheitselement ausgestattetes Sicherheitspapier oder Wertdokument, bereitzustellen, das die Nachteile des Stands der Technik zumindest weitgehend vermeidet.

Aufgabe der vorliegenden Erfindung ist es insbesondere, dass das Sicherheitselement mit einer heißsiegelfähigen Beschichtung bereitgestellt ist, die eine oder mehrere, bevorzugt eine optimierte Kombination, der folgenden Eigenschaften aufweist:
Die Beschichtung soll nach physikalischer Trocknung bzw. nach Abkühlen auf Raumtemperatur "tackfrei" im Sinne der vorstehenden Definition sein, d. h. die Sicherheitselemente sollen ohne Verkleben wickelbar und stapelbar sein.

Die Beschichtung soll vor dem Heißsiegelvorgang einen niedrigen Erweichungspunkt haben, um ein für Sicherheitselement und Wertgegenstand schonendes Heißsiegeln bei niedrigen Temperaturen zu erlauben.

Die Beschichtung soll nach dem Heißsiegelvorgang eine hohe Haftkraft und hohe Beständigkeiten, insbesondere gegen kochende Seifenlauge und organische Lösungsmittel, aufweisen, um ein versehentliches oder beabsichtigtes Entfernen des Sicherheitselements von dem Wertgegenstand zu verhindern.

Die Beschichtung soll nach dem Heißsiegelvorgang eine hohe Transparenz aufweisen, so dass die Klebstoffschicht des aufgeklebten Sicherheitselements nicht erkennbar ist.

Die Beschichtung soll bevorzugt auch bei der Auftragung auf das Sicherheitselement gut verarbeitbar sein.

Die Aufgaben werden gelöst durch das Verfahren nach Anspruch 1. Spezielle Ausführungsformen der Erfindung sind Gegenstand der abhängigen Ansprüche.

Die Erfindung beruht auf einem Sicherheitselement zur Verklebung mit einem Substrat wie einem Sicherheitspapier oder einem Wertdokument, wobei das Sicherheitselement mindestens eine Verklebungsfläche, die mit mindestens einer Klebstoffschicht beschichtet ist, aufweist, wobei der Klebstoff als eine Komponente mindestens ein pulverförmiges Antiblockmittel, und optional mindestens eine weitere filmbildende Komponente enthält, und das Antiblockmittel durch Wärme und/oder Strahlung und/oder mechanische Einwirkung und/ oder Lösungsmitteleinwirkung aktiviert werden kann und nach der Aktivierung in der Lage ist, mit einer Komponente des Klebstoffs und/oder mit sich selbst eine chemische Reaktion einzugehen.

Vorzugsweise ist das Antiblockmittel nach der Aktivierung in der Lage, mit der Verklebungsfläche des Sicherheitselements und/oder einer Verklebungsfläche des Substrats eine chemische Reaktion einzugehen.

Der Klebstoff enthält vorzugsweise als weitere filmbildende Komponente mindestens eine physikalisch filmbildende Komponente.

Der Klebstoff enthält bevorzugt einen bei Raumtemperatur festen oder flüssigen, thermisch aktivierbaren Vernetzer, der mit der physikalisch filmbildenden Komponente reagieren kann, oder als weitere filmbildende Komponente mindestens eine strahlenvernetzbare Komponente, bei mehrschichtigen Klebstoffaufbauten in mindestens einer weiteren Schicht, nicht nur der Schicht mit dem Antiblockmittel.

Die chemische Reaktion ist bevorzugt eine Polymerisation oder eine Polyaddition oder eine Polykondensation.

Die Polyreaktion wird vorzugsweise radikalisch oder ionisch oder thermisch oder durch Lichtstrahlung oder durch Elektronenstrahlung oder durch eine Ringöffnung ausgelöst.

Das Antiblockmittel ist vorzugsweise selbstvernetzend und/ oder mit mindestens einer weiteren filmbildenden Komponente des Klebstoffs vernetzt.

Das Antiblockmittel ist vorzugsweise ein duroplastischer Pulverlack oder ein thermoplastischer Pulverlack oder ein Isocyanat, wobei der Pulverlack oder das Isocyanat temporär inaktiviert, d. h. latent reaktiv, ist.

Die Klebstoffschicht ist vorzugsweise auf einer harten Zwischenschicht aufgebracht, die bevorzugt aus einem Thermoplast gebildet ist, und die Zwischenschicht ist über eine kein-Antiblockmittel-enthaltende Klebstoffschicht auf der Verklebungsfläche des Sicherheitselements aufgebracht, wobei die Klebstoffschicht andere latent reaktive Vernetzer enthalten kann.

Das Sicherheitselement wird bevorzugt bei erhöhtem Druck und erhöhter Temperatur auf ein Sicherheitspapier- oder Wertdokument-Substrat aufgebracht, wobei ein Klebstoff verwendet wird, der ein Antiblockmittel, das durch Wärme und/oder mechanische Einwirkung und/ oder Lösungsmitteleinwirkung aktivierbar ist, und optional mindestens eine weitere filmbildende Klebstoffkomponente, die physikalisch filmbildend oder wärmevernetzbar ist, enthält.

Das Sicherheitselement wird bevorzugt bei erhöhtem Druck und erhöhter Temperatur auf ein Sicherheitspapier- oder Wertdokument-Substrat aufgebracht, wobei ein Klebstoff verwendet wird, der ein Antiblockmittel, das durch Bestrahlung aktivierbar ist, und optional mindestens eine weitere filmbildende Klebstoffkomponente, die physikalisch filmbildend oder wärmevernetzbar oder strahlungsvernetzbar ist, enthält, und wobei die Klebstoffschicht während und/oder nach der Aufbringung des Sicherheitselements auf das Substrat bestrahlt wird.

Vorzugsweise wird ein kationisch strahlenhärtbarer Klebstoff verwendet und die Klebstoffschicht unmittelbar vor und/ oder während der Aufbringung des Sicherheitselements auf das Substrat bestrahlt.

Der Kern der vorliegenden Erfindung liegt darin, einer heißsiegelfähigen Zusammensetzung mindestens ein "reaktives Antiblockmittel" zuzugeben. Daneben ist auch in einer oder mehreren Schichten des Klebstoff-Aufbaus die Zugabe von reaktiven Substanzen möglich, die mit dem Bindemittel des Klebstoffes erst durch Aktivierung von außen kovalente Bindungen eingehen und nicht hauptsächlich gegen die Verblockung wirken.

Die erfindungsgemäßen "reaktiven Antiblockmittel" sind Substanzen, die unter Normalbedingungen, d. h. ohne Einwirkung von Strahlung oder mechanischer Belastung und bei Raumtemperatur, chemisch inert sind wie konventionelle Antiblockmittel (Kieselgele, Polyethylen, Metalloxide, etc.), unter geeigneten Bedingungen aber aktiviert werden können, in den Klebstoff-Film einpolymerisieren, gegebenenfalls auch mit OberflächenGruppen an den jeweils zu verklebenden Oberflächen reagieren, und dadurch "verschwinden". Das bedeutet, nach dem Einpolymerisieren ist das Antiblockmittel als solches nicht mehr existent, sondern ist unter Neubildung chemischer Bindungen modifiziert und in die Klebstoffschicht integriert worden. Eine derartige Integration kann auch ohne chemische Reaktion einfach durch Aufschmelzen stattfinden, wenn die Antiblockmittel und die sonstigen Komponenten des Klebstoffs, insbesondere die filmbildenden Polymere, miteinander verträglich sind, z. B. einander chemisch möglichst ähnlich sind.

Erfindungsgemäße Sicherheitselemente können grundsätzlich in jeder beliebigen Form vorliegen. Vorteilhafterweise handelt es sich um flächige Sicherheitselemente mit zwei gegenüberliegenden Hauptflächen. Bevorzugt wird nur eine der Hauptflächen mit einer Klebstoffbeschichtung versehen. Es kann ausreichend sein, die zu verklebende Fläche des Sicherheitselements nur teilweise mit einer Klebstoffbeschichtung zu versehen. Bevorzugt wird das Sicherheitselement aber vollflächig mit einem Substrat wie einem Sicherheitspapier oder einem Wertdokument verklebt, insbesondere wenn das Sicherheitselement nicht in das Substrat eingebettet, sondern auf das Substrat aufgeklebt wird. Alternativ können bei einer Einbettung des Sicherheitselements auch beide Flächen des Sicherheitselements mit dem Substrat verklebt werden, wobei die Klebstoffschichten an den beiden Flächen gleich oder verschieden sein können. Diese Ausführungsform ist insbesondere dann bevorzugt, wenn das Sicherheitselement in den Folienverbund einer Karte integriert wird oder als Sicherheitsfaden, der ganz oder teilweise (Fenstersicherheitsfaden) in ein Sicherheitspapier eingebettet werden soll, ausgebildet wird. Im Falle einer Karte sind die Substrate, mit denen das Sicherheitselement beidseitig verklebt wird, typischerweise Polymere, beispielsweise Polycarbonat oder PET-G, im Falle einer Banknote sind die Substrate, mit denen das Sicherheitselement beidseitig verklebt wird, typischerweise entweder Papier oder, im Falle einer Folienverbundbanknote, auf einer Seite Papier und auf der anderen Seite Polymer. Bei der Einbettung wird eine hohe Verbundhaftung und Transparenz erzielt, und das Sicherheitselement wird vor mechanischer und chemischer Beanspruchung geschützt.

Der Klebstoff mit dem erfindungsgemäßen Antiblockmittel wird bevorzugt als Lösung oder Dispersion, d. h. als Emulsion oder Suspension, auf die zu verklebende Fläche oder die zu verklebenden Flächen des Sicherheitselements aufgetragen und anschließend physikalisch getrocknet. Besonders bevorzugt wird eine wässrige Dispersion verwendet. Die Klebstoff-Lösung oder Dispersion kann direkt auf die zu verklebende Fläche des Sicherheitselements, oder auf eine entsprechend druckvorbehandelte oder mit einem Primer versehene Fläche aufgetragen werden. Alternativ kann die Klebstoffschicht mit dem reaktiven Antiblockmittel auch auf eine weitere Beschichtung des Sicherheitselements, beispielsweise eine zusätzliche Klebstoffschicht, aufgetragen werden. Diese zusätzliche Klebstoffschicht kann ebenfalls einen Vernetzer enthalten, der unter Normbedingungen inert ist. Nach physikalischer Trocknung der Klebstoffschicht ist die Klebstoffschicht klebfrei und tackfrei, und das beschichtete Sicherheitselement bzw. der Bogen oder das Endlosmaterial mit einer Vielzahl von Sicherheitselementen, kann problemlos aufgewickelt, umgewickelt, geschnitten, gestapelt, transportiert, gelagert, etc. werden. Das reaktive Antiblockmittel verhält sich dabei inert vergleichbar einem konventionellen Antiblockmittel und verhindert zuverlässig ein Verblocken und Verkleben in der Rollen- oder Bogenware. Es wirkt wie ein Abstandshalter oder "Kugellager", was im Wesentlichen durch die Pulverform bedingt ist.

Anders als konventionelle Antiblockmittel können reaktive Antiblockmittel jedoch aktiviert werden und aus dem inerten Zustand, in dem sie unter Normalbedingungen (Raumtemperatur, Atmosphärendruck) vorliegen, in einen reaktiven Zustand überführt werden. Die erfindungsgemäßen Antiblockmittel sind also "latent" reaktiv. Die Aktivierung kann beispielsweise einfach durch die Wärme beim Heißsiegeln des Sicherheitselements auf ein Wertgegenstand-Substrat erfolgen. Andere Aktivierungsarten sind Aktivierung durch Lichtstrahlung, d. h. UV-, IR-Strahlung, kurzwelliges sichtbares Licht, oder durch Elektronenstrahlung, oder auch Aktivierung durch mechanische Einwirkung wie Scherung und/oder Druck oder Lösungsmittelkontakt. Es können auch mehrere Aktivierungsarten gleichzeitig infrage kommen.

Je nach Art des verwendeten Klebstoffs und Antiblockmittels kann das Antiblockmittel mit anderen filmbildenden Komponenten des Klebstoffs eine Polyreaktion, d. h. eine Polymerisation, Polyaddition oder Polykondensation, eingehen und zusammen mit den anderen Komponenten des Klebstoffs einen vernetzten Klebstofffilm bilden, oder das Antiblockmittel kann auch ein Selbstvernetzer sein. In jedem Fall resultiert ein Klebstofffilm, in dem das Antiblockmittel in vernetzter Form vorliegt. Ein derartiger Klebstofffilm ist homogen und weist vorzugsweise eine hohe Transparenz auf. Bei ausreichender Verträglichkeit zwischen Klebstoff und Antiblockmittel kann das Antiblockmittel auch ohne chemische Reaktion, d.h. rein physikalisch, in den Klebstofffilm eingebunden werden und dadurch optisch verschwinden.

Die zu verklebenden Oberflächen, d. h. die Oberflächen von Sicherheitselement und Wertgegenstand-Substrat, sind typischerweise Polymeroberflächen wie beispielsweise Polyvinylsilikon, Polypropylen, Polyethylen, Polyethylenterephthalat, Polycarbonat und Polyacrylat, oder Oberflächen aus oder mit Baumwollfasern. An derartigen Oberflächen befinden sich reaktive Gruppen, beispielsweise Hydroxylgruppen, Carboxygruppen, ethylenisch ungesättigte Gruppen, etc., mit denen reaktive Antiblockmittel bevorzugt eine Reaktion eingehen können. Dadurch wird die Haftung an den zu verklebenden Oberflächen verbessert, was wiederum zu einer besseren Beständigkeit der Klebeverbindung führt. Die Klebeverbindungen weisen eine hohe Kochwäschebeständigkeit auf, und die Sicherheitselemente können nicht zu Fälschungszwecken von dem gesicherten Gegenstand entfernt werden, ohne das Sicherheitselement und/ oder den Gegenstand zu beschädigen.

Die reaktiven Antiblockmittel werden bevorzugt in Pulverform eingesetzt. Besonders bevorzugt sind Pulver mit Partikelgrößen von unter 200 µm, insbesondere unter 100 µm, und idealerweise unter 10 µm. Die reaktiven Antiblockmittel sind Polymere, bevorzugt Polymerpulver wie sie zur Pulverbeschichtung verwendet werden, d. h. sogenannte Pulverlacke. Infrage kommen dabei sowohl duroplastische Pulverlacke wie Pulverlacke aus Epoxid-, Polyester- und Acrylharzen, strahlenvernetzbare Pulverlacke, beispielsweise auf der Basis von Acrylaten, als auch thermoplastische Pulverlacke wie Pulverlacke aus Polyamid, Ethylen-Vinylacetat-Copolymeren, Polyethylen, Polyvinylchlorid, Polyestern und Polyepoxiden. Eine weitere bevorzugte Klasse von reaktiven Antiblockmitteln sind Isocyanate, wobei die Isocyanate in einer Form vorliegen müssen, die unter Normalbedingungen (Raumtemperatur, Atmosphärendruck) inaktiv ist. Geeignet sind latent reaktive, d. h. geblockte, sterisch gehinderte, eingekapselte oder in anderer Weise inaktivierte Isocyanate, wie sie beispielsweise von den Firmen Bayer, Baxenden oder Collano/nolax angeboten werden. Bevorzugt sind auch feste Acrylate.

Unter Berücksichtigung der Prozessbedingungen beim Heißsiegeln oder bei der Kartenlaminierung ist es bevorzugt, reaktive Antiblockmittel zu wählen, die einen Schmelzbereich von etwa 60 - 150° C, besonders bevorzugt etwa 90 - 110° C, und eine Aktivierungstemperatur (bei wärmeaktivierbaren Antiblockmitteln) im Bereich von etwa 70 - 170° C, besonders bevorzugt etwa 110 - 120° C, haben.

Strahlungsaktivierbare Antiblockmittel werden mittels geeignet positionierter Strahler, bevorzugt mittels üblicher UV-Strahler (dotiert oder undotiert, z. B. Hg- und Fe-Strahler) oder UV-Leuchtdioden, Elektronenstrahler und Excimer-Laser aktiviert. Bevorzugt sind UVaktivierbare Antiblockmittel, die beispielsweise mit einer Strahlerleistung im Bereich von etwa 240 W/cm und bei einer Geschwindigkeit im Bereich von etwa 110 m/ min aktiviert und vernetzt werden können.

Latent reaktive Isocyanate, z. B. geblockte, sterisch gehinderte oder eingekapselte Isocyanate, und andere latent reaktive Antiblockmittel wie beispielsweise feste Acrylate (z. B. bei Pulverlacken) können durch Druck, Scherung, Wärme, Elektronenstrahlung oder UV-Strahlung aktiviert werden.

Handelt es sich bei dem reaktiven Abstandhalter um ein latent reaktives Isocyanat, dessen Partikel nicht chemisch geblockt sondern oberflächendesaktiviert sind, so bietet sich als eine weitere besonders bevorzugte Variante für temperaturempfindliche Substrate wie z.B.

Banknotenpapier die Aktivierung durch geringe Mengen an organischem Lösungsmittel an. Die Aktivierung der reaktiven Partikel durch Temperatur, auch in Kombination mit Druck und/oder Scherung, findet in der Regel oberhalb von 120°C statt, bei einigen Produkten erst ab 160°C. Die Erweichungstemperatur des zu vernetzenden Bindemittels liegt in der Regel darunter. Bei Anwesenheit von Spuren von Lösungsmitteln oder auch größeren Mengenanteilen kann die Aktivierungstemperatur der Isocyanatpartikel unter 120°C gesenkt werden, bei entsprechender Eignung auch unter die noch tiefer liegende Siegeltemperatur des zu vernetzenden Bindemittels. Als besonders bevorzugte Variante der Applikation von derart ausgestatteten Sicherheitsmerkmalen auf Substrate wie Banknotenpapier kann zur Aktivierung der latent reaktiven Partikel eine lösungsmittelhaltige Beschichtung auf das Substrat aufgebracht werden. Hierbei kann es sich um eine vollflächig aufgebrachte Beschichtung handeln oder um einen Papierprimer, der auch weitere Substanzen zur Erzielung optischer Effekte enthalten kann, oder das Lösungsmittel wird pur bzw. in Verdünnung mit Wasser und eventuell Additiven auf das Substrat aufgebracht direkt vor der Applikation des mit den latent reaktiven Partikeln ausgestatteten Sicherheitsmerkmals. Denkbar ist auch der Einsatz von Mikrokapseln, welche das Lösungsmittel pur oder eingedickt mit einem geeigneten Bindemittel enthalten. Diese Kapseln können sowohl im Papierprimer als auch in der Klebstoffschicht auf dem Sicherheitsmerkmal eingebettet sein. Als weitere Variante ist es möglich, das mit oberflächendesaktiverten Isocyanatpartikeln ausgestattete Sicherheitsmerkmal bei der Applikation auf das Substrat durch eine Lösungsmitteldampf-haltige Umgebung oder ein Lösungsmitteltauchbad zu führen oder mit einer Lösungsmittel-haltigen Aerosole zu besprühen. Die Varianten mit Lösungsmitteldampf und Aerosole sind bevorzugt vor der Applikation anzuwenden, die Tauchbad-Variante bevorzugt nach der Applikation auf das Substrat. Das Lösungsmittel gelangt durch Diffusion zu den latent reaktiven Partikeln, greift deren Oberfläche an und ermöglicht so den Kontakt der nun reaktionsfähigen Isocyanat-Gruppen mit dem zu vernetzenden Bindemittel. Zur Aktivierung ist jedes organische Lösungsmittel geeignet, welches die Oberfläche des reaktiven Partikels angreift. Es kann sich hierbei um tief- wie auch hochsiedende Lösungsmittel handeln. Auch Weichmacher kommen infrage. Bevorzugt sind hierbei Aceton, 2-Propanol, Ethanol, Methoxypropylalkohol, Dipropylenglycol oder Dialkylphthalate. Besonders bevorzugt sind 2-Butanon und Butylacetat. Die Einsatzmöglichkeit von Lösungsmitteln zur Aktivierung bei reduzierter Temperatur ist bevorzugt bei oberflächendesaktivierten Isocyanat-Partikeln, sowohl beim Einsatz als Abstandhalter in der obersten Klebstoffschicht als auch bei Einsatz als reiner Vernetzer in tiefer liegenden Klebstoffschichten bei mehrschichtigem Auftrag von Klebstoffen bei der Herstellung von Sicherheitsmerkmalen.

Neben der Verbesserung der Transparenz und der Haftungseigenschaften der Klebstoffschicht mit den reaktiven Antiblockmitteln besteht ein weiterer Vorteil des Verwendens der reaktiven Antiblockmittel in der Möglichkeit, mit Hilfe niedrigschmelzender, pulvriger Antiblockmittel den Erweichungsbereich eines Heißsiegelklebersystems zu senken. In der Regel steigt beim Einsatz gering strukturierter und daher niedrigschmelzender Moleküle die Klebrigkeit des Klebstoffsystems, und die damit beschichteten Sicherheitselemente neigen zum Verblocken. Das Problem wird dadurch verschärft, dass die Klebstoffe üblicherweise als Lösungen oder Dispersionen in einem Druckverfahren aufgebracht werden, die physikalisch getrocknete Klebstoffschicht daher noch schwer entfernbare Reste an Lösemittel und/oder Wasser enthalten kann, was die Klebrigkeit und Blockneigung ebenfalls erhöht. Der Zusatz der reaktiven Antiblockmittel in Pulverform zu den Klebstofflösungen oder Klebstoffdispersionen bietet hier einen Ausweg. Niedrigschmelzende Heißsiegelklebstoffe ermöglichen ein schonenderes Heißsiegeln, Kaschieren, Laminieren oder sonstiges Verkleben von Substraten mit einem Verfahren, das eine erhöhte Temperatur erfordert.

Die reaktiven Antiblockmittel können grundsätzlich in Kombination mit allen bekannten Heißsiegelklebstoffsystemen verwendet werden. Insbesondere können sie sowohl in unreaktiven, d. h. rein physikalisch filmbildenden, Klebstoffsystemen als auch in reaktiven Klebstoffsystemen verwendet werden, beispielsweise den Klebstoffen mit wenigstens einer strahlenvernetzbaren Komponente, wie sie in WO 2006/005434 offenbart werden. Bevorzugt werden sie in Klebstoffsystemen verwendet, die sowohl physikalisch als auch chemisch (z. B. strahlenvernetzend) filmbildend sind. Unter "physikalisch filmbildend" wird hierin verstanden, dass nur physikalische Bindungen ausgebildet werden. Physikalische Bindungen sind beispielsweise van der Waals und Dipol-Dipol-Wechselwirkungen, Wasserstoffbrücken und ionische Wechselwirkungen. Unter "chemisch filmbildend" wird hingegen verstanden, dass chemische Bindungen, in der Regel kovalente Bindungen, ausgebildet werden. Chemisch filmbildende Klebstoffsysteme enthalten beispielsweise Verbindungen mit ungesättigten Doppelbindungen oder mit energetisch ungünstigen Ringstrukturen (beispielsweise Epoxide). Auch Säure-Base-Reaktionen sind möglich. Auch reine Pulverlacke, bzw. Antiblockmittel-Dispersionen, können als Klebstoffe verwendet werden. Der Einsatzbereich der reaktiven Antiblockmittel ist somit recht breit und liegt bei etwa 0,5 bis 100 Gew. %, d. h. ein Klebstoffsystem kann als Bindekörper 0,5 bis 100 Gew.% reaktives Antiblockmittel enthalten.

In der Regel werden die reaktiven Antiblockmittel als Klebstoff-Zusätze verwendet, d. h. ihr Anteil an den filmbildenden Komponenten beträgt deutlich unter 100%, bevorzugt etwa 0,5 bis 50 Gew. %, weiter bevorzugt etwa 3 bis 50 Gew. %, besonders bevorzugt etwa 10 bis 40 Gew. %, am meisten bevorzugt etwa 10 bis 20 Gew.%.

Klebstoffsysteme, mit denen die reaktiven Antiblockmittel verwendet werden können, sind beispielsweise physikalisch filmbildende Klebstoffe wie Polyvinylchlorid, Acrylate, Ethylenvinylacetat, Polyvinylacetat, Polyethylen, Polypropylen, gesättigte Polyester, Polyvinylether, Vinylether, Polyamid, Polyethylenterephthalat, Ethylen-Acrylsäure-Copolymere, etc.. Physikalisch filmbildende Heißsiegelklebstoffe sind dem Fachmann bekannt.

Die reaktiven Antiblockmittel können bevorzugt nach Aktivierung mit den Polymeren der physikalisch filmbildenden Klebstoffe vernetzen. Dies führt insbesondere bei niedrigschmelzenden Systemen nach dem Heißsiegeln zu einer Erhöhung des Schmelzpunktes aufgrund der chemischen Vernetzung und damit zu einer besseren Beständigkeit der Klebeverbindung zwischen den verklebten Substraten, beispielsweise gegen Lösungsmittel und Seifenlauge. Wegen der Vernetzung kann die Klebeverbindung nicht mehr durch Temperaturerhöhung gelöst werden und wird dadurch fälschungssicherer.

Die reaktiven Antiblockmittel können auch in vernetzenden oder nachvernetzenden Klebstoffsystemen verwendet werden. Generell können kationisch, anionisch, nichtionisch und radikalisch vernetzende Systeme eingesetzt werden. Die Aktivierung kann durch Strahlung (Lichtstrahlung oder Elektronenstrahlung) oder thermisch erfolgen. Häufig ist sowohl eine Strahlungsaktivierung als auch eine thermische Aktivierung möglich. Bei Lichthärtung müssen die Heißsiegelklebstoffsysteme Fotoinitiatoren enthalten, bei Elektronenstrahlhärtung nicht. Auch bei ionisch härtenden Systemen, die thermisch vernetzt werden, sind keine Fotoinitiatoren erforderlich.

Geeignete strahlenhärtende Systeme sind Dispersionen, die ausgewählt sind aus der Gruppe, die aus aliphatischen Polyurethandispersionen, aromatischen Polyurethandispersionen, Acrylaten, anionischen acrylatmodifizierten Polyurethandispersionen, Polyurethan-Polyetheracrylaten und deren Gemischen besteht.

Besonders gut geeignet sind acrylierte Polyurethandispersionen. Als Beispiele solcher acrylierten Polyurethandispersionen sind DW7770, DW7773, DW7825, DW7772, DW7849 (UCB, Surface Specialities) zu nennen. Auch Polyurethanlösungen wie Actilane 340 Epoxynovolacacrylat in Butoxyethylacetat (Akzo) sind geeignet.

Weitere strahlenhärtbare Dispersionen sind beispielsweise NeoRad R-440, NeoRad R-441, NeoRad R-445 (alle von NeoResins), Laromer LR 8949, Laromer LR 8983, Laromer LR 9005 (alle von BASF), LUX 101 UV-Dispersion, LUX 241 UV-Dispersion, LUX 308 UV-Dispersion, LUX 352 UV-Dispersion, LUX 370 UV-Dispersion, LUX 390 UV-Dispersion, LUX 399 UV-Dispersion, LUX 331 UV-Dispersion, LUX 338 UV-Dispersion (alle von Alberdingk), Halwedrol UV 95/92 W, Halwedrol UV 14/40 W, Halwedrol UV-TN 6711/40 W, Halwedrol UV 65/40 W, Halwedrol UV-TN 7561-3/40 W, Halwedrol UV-TN 7157/40 W (alle von Hüttenes-Albertus), Bayhydrol UV 2282 und Bayhydrol UV- VP LS 2280 (Bayer).

Unter den genannten Dispersionen befinden sich anionische und nicht ionische Dispersionen. Bei den meisten dieser Dispersionen handelt es sich um aliphatische Polyurethandispersionen (z. B. aliphatische Polyesterpolyurethane), daneben aber auch um aromatische Polyurethandispersionen und Copolymere (z. B. Dispersionen auf Basis von aliphatischen Polyurethan- und Acrylsäureester-Copolymeren), um Acrylate (Acrylsäureester-Copolymere) sowie anionische acrylatmodifizierte UVhärtende Polyurethandispersionen oder auch Polyurethan-Polyetheracrylate.

Zur Lichthärtung sind im allgemeinen Fotoinitiatoren erforderlich. Die Vernetzung kann mithilfe eines Fotoinitiators auf besonders einfache Weise gestartet und kontrolliert werden. Bevorzugte Beispiele solcher Fotoinitiatoren sind Darocur 4265, Darocur 1173, Irgacure 500, Irgacure 184, Irgacure 2959, Irgacure 819 DW (alle von Ciba), Esacure KIP 100 F (Lamberti), Lucirin TPO (BASF), UVI-6992 (Dow Chemical Company), Omnicat 440 (IGM). Feste Initiatoren, die nicht gut wasserlöslich sind, können mit Vorteil in Wasser vordispergiert werden, analog Irgacure 819DW. Bei geeignetem Schmelzbereich fungieren sie ebenfalls als "reaktive Antiblockmittel". Geeignet ist z. B. Lucirin TPO.

Besonders gut geeignete kationisch strahlenhärtende Heißsiegelkleber enthalten epoxidmodifizierte Vinyl-Copolymere. Ein Beispiel für epoxidmodifiziertes Vinyl-Copolymer ist UCAR VERR 40 (Dow Chemical Company). Ein kationisch härtendes UV-Lacksystem ist ISS 1202 (Herberts).

Besonders bevorzugte Formulierungen sind:
45,0 Gew.% Laromer LR 9005 (BASF)
35,0 Gew. % Laromer LR 8983 (BASF)
15,0 Gew. % Collano HCM-555 (Collano)
5,0 Gew. % Irgacure 819 DW (Ciba)
   und
60,0 Gew. % Polyurethan Acrylate 98-283 W (Rahn)
20,0 Gew. % Laromer LR 9005 (BASF)
15,0 Gew. % Collano HCM-555 (Collano)
5,0 Gew. % Irgacure 819 DW (Ciba)

Laromer und Polyurethan-Acrylat sind strahlenhärtende Dispersionen, Collano ist das reaktive Antiblockmittel (ein latent reaktives Isocyanat) und Irgacure ist der Fotoinitiator.

Der Festkörperanteil der verwendeten Klebstoff-Dispersionen liegt bevorzugt zwischen 20 Gew. % und 60 Gew. %, bevorzugter zwischen 30 Gew. % und 50 Gew. %, besonders bevorzugt zwischen 35 Gew. % und 50 Gew.%. Der Festkörpergehalt kann durch Verdünnen nach Bedarf eingestellt werden. Handelsübliche Dispersionen weisen typischerweise einen Festkörpergehalt zwischen 38 Gew. % und 51 Gew. % auf. Aufgrund der einfachen Verfügbarkeit werden derartige Dispersionen bei der vorliegenden Erfindung bevorzugt verwendet.

Wie bereits angegeben, kann das reaktive Antiblockmittel etwa 0,5 - 100 Gew. % des Festkörpergehalts des verwendeten Klebstoffs ausmachen. Zusätzlich zu den die Verklebung bewirkenden Bestandteilen enthält ein Klebstoff typischerweise außerdem Hilfsstoffe wie Dispergierhilfsmittel, Emulgatoren, Entschäumer, Verlaufshilfsmittel und gegebenenfalls weitere einem Fachmann bekannte Additive. Dispergierhilfsmittel sind bevorzugt in einer Menge von bis zu 100 Gew. % bezogen auf das reaktive Antiblockmittel enthalten.

Der Klebstoff enthält vorzugsweise einen bei Raumtemperatur festen oder flüssigen, thermisch aktivierbaren Vernetzer, der mit der physikalisch filmbildenden Komponente reagieren kann, oder als eine weitere filmbildende Komponente mindestens eine strahlenvernetzbare Komponente, bei mehrschichtigen Klebstoffaufbauten in mindestens einer weiteren Schicht, nicht nur der Schicht mit dem Antiblockmittel. Als thermisch aktivierbarer Vernetzer finden beispielsweise die oben genannten thermisch aktivierbaren Vernetzer Anwendung. Die strahlenvernetzbare Komponente kann beispielsweise von den Stoffen gewählt sein, wie sie in WO 2006/005434 offenbart werden.

Gemäß einer bevorzugten Ausführungsform umfasst das erfindungsgemäße Sicherheitselement neben der Klebstoffschicht mit reaktivem Antiblockmittel eine weitere Klebstoffschicht, wobei es sich um eine mittels Strahlung zumindest vorvernetzte Schicht handelt. Diese Schicht wird bevorzugt vor dem Auftragen der Klebstoffschicht mit reaktivem Antiblockmittel auf die zu verklebende Fläche des Sicherheitselements aufgebracht und mittels Strahlung soweit vernetzt, dass ein mit der Gefahr des Haftungsverlusts durch Entnetzen verbundenes späteres Aufschmelzen ausgeschlossen wird, trotzdem aber noch eine gute Überdruckbarkeit gegeben ist. Zur Herstellung eines erfindungsgemäßen Sicherheitselements wird die zusätzliche, mittels Strahlung zumindest vorvernetzte Klebstoffschicht mit der Klebstoffschicht mit reaktivem Antiblockmittel überschichtet. Die Klebstoffschicht mit reaktivem Antiblockmittel wird dann lediglich physikalisch getrocknet, um Tackfreiheit zu erzielen und gleichzeitig die Schmelzbarkeit zu erhalten.

Gemäß einer weiteren bevorzugten Ausführungsform umfasst das erfindungsgemäße Sicherheitselement neben einer ersten Klebstoffschicht, die kein reaktives Antiblockmittel enthält, eine harte Zwischenschicht und eine zweite Klebstoffschicht als "Grenzschicht", die ein reaktives Antiblockmittel enthält. Die harte Zwischenschicht soll vorzugsweise dünn sein, d.h. eine Dicke von 0,3 µm bis 3 µm, bevorzugt von 0,7 µm bis 2 µm und besonders bevorzugt von 1 µm aufweisen. Als "hart" wird in diesem Zusammenhang eine Zwischenschicht definiert, wenn sie hart im Vergleich zu den darunter liegenden Heißsiegelkleberschichten ist, um ein Absacken der Abstandshalter in tiefer liegende Heißsiegelkleberschichten zu verhindern.

Zur Bildung der harten Zwischenschicht sind bevorzugt Thermoplaste geeignet, beispielsweise Styrol-Acrylat-Harze und Polyurethan-Harze. Zur Herstellung eines erfindungsgemäßen Sicherheitselements wird die erste Klebstoffschicht, die kein reaktives Antiblockmittel enthält, auf die zu verklebende Fläche des Sicherheitselements aufgebracht und mit der harten Zwischenschicht überschichtet. Auf die harte Zwischenschicht wird anschließend die zweite Klebstoffschicht, die ein reaktives Antiblockmittel enthält, als Grenzschicht aufgebracht.

Das erfindungsgemäße Sicherheitselement kann einlagig oder mehrlagig, typischerweise mehrlagig, sein. Die Form ist beliebig, typische Dicken liegen im Bereich von 1 µm - 100 µm, abhängig in erster Linie von dem mit dem Sicherheitselement auszustattenden Wertgegenstand. Zwar können grundsätzlich beliebige Produkte mit dem erfindungsgemäßen Sicherheitselement geschützt werden, aber die Verwendung für Sicherheitspapiere und Wertdokumente wie beispielsweise Banknoten ist bevorzugt. Hier werden besonders hohe Anforderungen an die Qualität und die Hafteigenschaften des Sicherheitselements gestellt. Diese Anforderungen werden von dem erfindungsgemäßen Sicherheitselement in vorteilhafter Weise erfüllt. Mit besonderem Vorteil können die Sicherheitselemente mit hochtransparenter und hochhaftfähiger Klebstoffschicht für Lochapplikationen (beispielsweise bei Banknoten mit Loch) oder für Applikationen in Bereichen einer Karte, in denen eine besonders hohe Transparenz wünschenswert ist, eingesetzt werden. Die hohe Transparenz und Haftfähigkeit ist auf allen typischerweise in Frage kommenden Substraten wie Cellulose, Baumwolle und Polymeroberflächen (PVS, PP, PE, PET, PET-G, usw.) gegeben.

Die reaktiven Antiblockmittel werden erfindungsgemäß bevorzugt in Heißsiegelklebstoffsystemen eingesetzt. Die Heißsiegelklebstoffsysteme wiederum werden erfindungsgemäß bevorzugt zum Verkleben von Sicherheitselementen mit Wertgegenständen eingesetzt. Die Verwendung der reaktiven Antiblockmittel ist jedoch nicht auf diesen speziellen Einsatzzweck beschränkt. Vielmehr können reaktive Antiblockmittel grundsätzlich in jedem System eingesetzt werden, in dem eine vorübergehende Tackfreiheit wünschenswert ist, das aber zu einem gegebenen Zeitpunkt aktiviert werden soll. Beispiele sind mehrschichtige Sicherheitselemente, bei denen ein Teilschichtaufbau mit einer Farbe oder einem Lack bedruckt wird und erst zu einem späteren Zeitpunkt mit einem weiteren Teilschichtaufbau verbunden wird. Zwischenzeitlich soll der mit Farbe oder Lack beschichtete Teilschichtaufbau gelagert, d. h. gewickelt oder gestapelt, werden, weshalb die Farbe oder der Lack nach physikalischer Trocknung tackfrei sein sollte. Ein weiteres Beispiel ist die Verwendung der reaktiven Antiblockmittel in Klebstoffen, die zum Kaschieren und/ oder Laminieren von Wertdokumenten in Kartenform verwendet werden. Die Klebstoffe verbinden hier nicht ein Sicherheitselement mit einem Wertdokument sondern vielmehr Schichten des Wertdokuments untereinander bzw. Abdeckfolien mit dem Wertdokument.

Die erfindungsgemäßen Sicherheitselemente können in der Schichtfolge, die sie später auf einem zu schützenden Gegenstand aufweisen werden, hergestellt werden. Sie können aber auch auf einer separaten Schicht, beispielsweise einer Kunststofffolie, in der umgekehrten Reihenfolge, in der sie später auf dem zu schützenden Gegenstand vorliegen soll, vorbereitet werden und anschließend mittels einer Klebstoffschicht, d. h. der Klebstoffschicht mit reaktivem Antiblockmittel, in den gewünschten Umrissformen auf den Wertgegenstand übertragen werden. Diese Sicherheitselemente werden als Transferelemente bezeichnet. Transferelemente werden bevorzugt als Endlosbänder mit einer Vielzahl von Einzel-Transferelementen vorbereitet. Die separate Schicht kann nach der Übertragung des Transferelements auf den Wertgegenstand abgezogen werden. Um das Ablösen der separaten Schicht nach dem Transfer zu erleichtern, kann zwischen dieser Schicht und dem abzulösenden Teil des Sicherheitselements eine Trennschicht vorgesehen werden.

Zur Herstellung eines erfindungsgemäßen Sicherheitselements, das eine Klebstoffschicht mit reaktiven Antiblockmittel aufweist, wird gemäß einer Ausführungsform ein Klebstoffsystem, das ein reaktives Antiblockmittel enthält, auf mindestens eine Fläche des Sicherheitselements aufgebracht, bevorzugt vollflächig, wobei jedoch in bestimmten Fällen auch eine teilflächige Aufbringung ausreichend sein kann. Anschließend wird die Klebstoffschicht physikalisch getrocknet.

Gemäß einer bevorzugten Verfahrensvariante der vorangehend beschriebenen Ausführungsform wird die Klebstoffschicht mit reaktivem Antiblockmittel als wässrige Dispersion aufgetragen.

Zur Herstellung eines erfindungsgemäßen Sicherheitselements, das eine Klebstoffschicht mit reaktiven Antiblockmitteln aufweist, wird gemäß einer weiteren Ausführungsform eine erste Klebstoffschicht, die kein reaktives Antiblockmittel enthält, auf mindestens eine Fläche des Sicherheitselements aufgebracht, bevorzugt vollflächig, wobei jedoch in bestimmten Fällen auch eine teilflächige Aufbringung ausreichend sein kann. Anschließend wird auf diese erste Klebstoffschicht, die kein reaktives Antiblockmittel enthält, eine harte Zwischenschicht aufgebracht. Diese harte Zwischenschicht soll vorzugsweise dünn sein, d.h. eine Dicke von 0,3 µm bis 3 µm, bevorzugt von 0,7 µm bis 2 µm und besonders bevorzugt von 1 µm aufweisen. Als "hart" wird in diesem Zusammenhang eine Zwischenschicht definiert, wenn sie hart im Vergleich zu den darunter liegenden Heißsiegelkleberschichten ist, um ein Absacken der Abstandshalter in tiefer liegende Heißsiegelkleberschichten zu verhindern.

Zur Bildung der harten Zwischenschicht sind bevorzugt Thermoplaste geeignet, beispielsweise Styrol-Acrylat-Harze und Polyurethan-Harze. Auf die harte Zwischenschicht wird nun eine zweite Klebstoffschicht, die ein reaktives Antiblockmittel enthält, als "Grenzschicht" aufgebracht. Diese Ausführungsform ist gegenüber der vorangehend beschriebenen ersten Ausführungsform, die ein direktes Aufbringen einer ein reaktives Antiblockmittel enthaltenden Klebstoffschicht auf die Fläche des Sicherheitselements beinhaltet, vorteilhaft, weil ein Absacken der Antiblockmittel-Partikel von der Oberfläche der Klebstoffschicht und Hineingedrücktwerden der Antiblockmittel-Partikel in tiefere Regionen der Klebstoffschicht vermieden wird. Die harte Zwischenschicht stützt die in der Grenzschicht enthaltenen Antiblockmittel-Partikel und verteilt den Wickeldruck der aufgewickelten Rollen- oder Bogenware gleichmäßig auf die tiefer liegende Klebschicht. Auf diese Weise wird die Funktion des Antiblockmittels, das an der Oberfläche der Klebstoffschicht eine Mikrorauigkeit erzeugt und dadurch beim Aufeinanderlegen der Rollen- oder Bogenware eine hauchdünne Luftschicht als Trennschicht bildet, verbessert. Bei dem Aufbringen des Sicherheitselements auf ein Substrat, wie etwa Papier, erweicht die harte Zwischenschicht ebenso wie die Klebstoffschichten und wird von Papierfasern teilweise durchdrungen, wodurch die erste Klebstoffschicht mit der zweiten Klebstoffschicht in Kontakt kommen kann und sich die beiden Klebstoffschichten miteinander vernetzen können. Nach dem Aufbringen des Sicherheitselements auf Papier kann die harte Zwischenschicht beim Versuch, das Sicherheitselement gewaltsam zu entfernen, eine Sollbruchstelle darstellen und damit als Fälschungsschutz dienen. Hierzu sollte die harte Zwischenschicht vorzugsweise eine Schichtdicke von mehr als 1 µm aufweisen.

Gemäß einer bevorzugten Verfahrensvariante der vorangehend beschriebenen Ausführungsform wird sowohl die erste Klebstoffschicht, die kein reaktives Antiblockmittel enthält, als auch die ein reaktives Antiblockmittel enthaltende zweite Klebstoffschicht jeweils als wässrige Dispersion aufgetragen.

Gemäß einer insbesondere bevorzugten Verfahrensvariante der vorangehend beschriebenen Ausführungsform enthält die harte Zwischenschicht Farbstoffe oder Pigmente. Hierbei werden beim Aufbringen des Sicherheitselements auf Papier Melier-Effekte erzeugt, da insbesondere an rauen Stellen Papiers Papierfasern die harte Zwischenschicht durchdringen und die Zwischenschicht inhomogen erscheinen lassen.

Die vorliegende Erfindung umfasst auch ein Verfahren zur Herstellung eines Sicherheitspapiers oder Wertdokuments, wobei das Sicherheitspapier oder das Wertdokument mit einem erfindungsgemäßen Sicherheitselement ausgestattet wird.

Gemäß einer bevorzugten Verfahrensvariante wird das Sicherheitselement bei erhöhtem Druck und erhöhter Temperatur auf ein Substrat des Wertgegenstands aufgebracht und das reaktive Antiblockmittel aktiviert. Die Aktivierung kann entweder bereits bei der Aufbringung erfolgen, beispielsweise durch die Wärme und/oder den ausgeübten Druck und/oder die ausgeübten Scherkräfte. Bei strahlenvernetzbaren Antiblockmitteln (und ggf strahlenvernetzbaren filmbildenden Klebstoffkomponenten) wird die Vernetzung während oder nach der Aufbringung durch eine geeignete Bestrahlung, abhängig vom verwendeten Antiblockmittel, initiiert. Langsam vernetzende Systeme (reaktives Antiblockmittel und/ oder sonstige Klebstoffkomponenten), wie kationisch strahlenvernetzbare Systeme, erlauben auch eine Initiierung der Vernetzung durch Bestrahlung unmittelbar vor der Aufbringung des Sicherheitselements auf das Sicherheitspapier oder den Wertgegenstand. Unmittelbar nach der Initiierung der Vernetzung wird das Sicherheitselement bei erhöhtem Druck und erhöhter Temperatur auf ein Sicherheitspapier oder ein Wertdokument aufgebracht.

Es ist bevorzugt, strahlenvernetzbare Systeme, die nach Initiierung der Vernetzung auch ohne weitere Bestrahlung weiter vernetzen, zu verwenden, da auf diese Weise die Strahlungsbelastung von Sicherheitselement und Sicherheitspapier/Wertdokument gering gehalten werden kann. In diesem Fall muss die Bestrahlung weder durch den Schichtaufbau des Sicherheitselements hindurch noch durch das Sicherheitspapier/Wertdokument hindurch durchgeführt werden, sondern es kann die Klebstoffbeschichtung des Sicherheitselements bestrahlt werden und das Sicherheitselement durch Heißsiegeln mit dem Sicherheitspapier/Wertdokument verbunden werden, nachdem die Vernetzungsreaktion bereits begonnen hat.

Der Klebstoff kann neben dem reaktiven Antiblockmittel weitere wärmevernetzbare und/oder strahlenvernetzbare Komponenten enthalten, wobei das Vernetzungsverhalten der Komponenten unterschiedlich sein kann. Beispielsweise kann ein rasch härtendes oder vernetzendes Klebstoffsystem (im Extremfall ein innerhalb von Sekundenbruchteilen vernetzender Klebstoff) mit einem Antiblockmittel kombiniert werden, dessen Reaktion sehr langsam ist (im Extremfall Tage oder sogar Wochen beansprucht). Durch die Wahl eines geeigneten Antiblockmittels kann man mit einem bestimmten Klebstoff flexibel auf unterschiedliche Substrate und Applikationsbedingungen reagieren.

Die chemischen Reaktionen in der Klebstoffschicht, d. h. die Vernetzung der Klebstoffkomponenten untereinander und/oder ggf. die Vernetzung des reaktiven Antiblockmittels und/ oder anderer Klebstoffkomponenten mit Oberflächengruppen an einer oder an beiden Oberflächen der miteinander zu verklebenden Substrate (typischerweise Sicherheitselement und Sicherheitspapier/Wertdokument), können auch in mehreren Schritten erfolgen. Beispielsweise kann das Sicherheitselement bei erhöhtem Druck und/oder erhöhter Temperatur auf ein Sicherheitspapier oder Wertdokument aufgebracht und anschließend die Klebstoffschicht mit reaktivem Antiblockmittel mittels Strahlung vorvernetzt werden. Liegt das Sicherheitselement als Transferelement vor, kann die reaktives Antiblockmittel enthaltende Klebstoffschicht nach dem Entfernen der Transferelement-Trägerschicht und gegebenenfalls der Trennschicht vollständig vernetzt werden.

Die vorliegende Erfindung umfasst auch die Verwendung der oben beschriebenen Sicherheitselemente zur Produktsicherung von Waren jeglicher Art, beispielsweise als Bestandteil von Verpackungsmaterial. So sind sterilisierbare Folienverpackungen mit einem erfindungsgemäßen Sicherheitselement siegel- und vernetzbar. Bei erfolgreicher UV-Sterilisation wird gleichzeitig die Siegelnaht vernetzt und fest.

Die vorliegende Erfindung wird nachfolgend anhand von Figuren noch weiter veranschaulicht. Es wird darauf hingewiesen, dass die Figuren nicht maßstabs- und proportionsgetreu sind.

Es zeigen:
Fig. 1 eine schematische Querschnittsdarstellung eines erfindungsgemäßen Sicherheitselements mit einer Klebstoffschicht mit reaktivem Antiblockmittel;
Fig. 2 eine schematische Querschnittsdarstellung eines Sicherheitspapiers, das mit dem Sicherheitselement von Fig. 1 ausgestattet ist;
Fig. 3 eine schematische Querschnittsdarstellung eines Sicherheitspapiers, das mit einer alternativen Ausgestaltung des erfindungsgemäßen Sicherheitselements ausgestattet ist;
Fig. 4 eine schematische Querschnittsdarstellung einer Ausweiskarte, die mit einem erfindungsgemäßen Sicherheitselement ausgestattet ist;
Fig. 5 eine schematische Querschnittsdarstellung eines Transferbands mit als Transferelemente ausgebildeten erfindungsgemäßen Sicherheitselementen;
Fig. 6 eine schematische Querschnittsdarstellung eines Sicherheitspapiers nach Aufbringung eines Transferelements gemäß Fig. 5;
Fig. 7 eine schematische Darstellung eines Wertdokuments in Aufsicht; und
Fig. 8 einen Querschnitt durch das Wertdokument von Fig. 7.
Fig. 9 eine schematische Querschnittsdarstellung eines Klebschichtsystems gemäß einer bevorzugten Ausgestaltung des erfindungsgemäßen Sicherheitselements;
Fig. 10 eine schematische Querschnittsdarstellung eines Klebschichtsystems gemäß einer weiteren bevorzugten Ausgestaltung des erfindungsgemäßen Sicherheitselements.

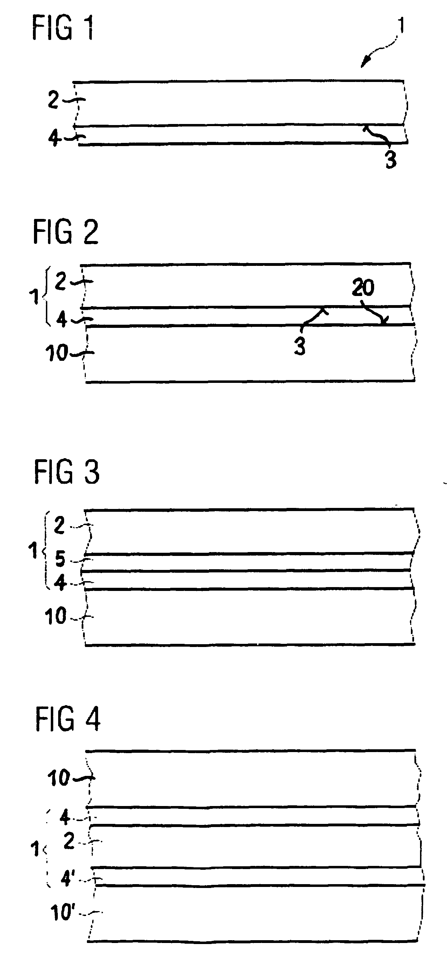

Fig. 1 zeigt eine schematische Darstellung eines erfindungsgemäßen Sicherheitselements 1 mit einem Schichtaufbau aus Funktionsschichten und Hilfsschichten, der zusammenfassend mit der Bezugsziffer 2 bezeichnet ist. Das Sicherheitselement hat eine zur Verklebung mit einem Sicherheitspapier oder Wertdokument oder einem sonstigen Wertgegenstand vorgesehene Oberfläche 3. Zur Herstellung des Sicherheitselements wird eine Klebstoffschicht, die als eine Komponente mindestens ein pulverförmiges Antiblockmittel enthält, das durch Wärme und/oder Strahlung und/oder mechanische Einwirkung aktiviert werden kann und nach der Aktivierung in der Lage ist, mit einer Komponente des Klebstoffs und/ oder Fläche 3 des Sicherheitselements und/oder einer Oberfläche des Wertgegenstands eine chemische Reaktion einzugehen, auf die Fläche 3 aufgetragen, beispielsweise in Form einer wässrigen Dispersion. Anschließend wird die Dispersion physikalisch getrocknet, beispielsweise bei Raumtemperatur oder erhöhter Temperatur (z. B. 80° C), wodurch eine bei Raumtemperatur klebfreie und im wesentlichen tackfreie Klebstoffschicht 4 gebildet wird.

Das Sicherheitselement 1 weist selbstverständlich mindestens ein Sicherheitsmerkmal auf, beispielsweise ein Hologramm, fluoreszierende Substanzen, Flüssigkristalle, elektrisch leitfähige Schichten, magnetische Sicherheitsmerkmale, etc.. Die Sicherheitsmerkmale sind für die vorliegende Erfindung nicht von Bedeutung und daher nicht dargestellt, weder in Fig. 1 noch in den übrigen Figuren.

Fig. 2 zeigt eine schematische Querschnittsdarstellung eines Sicherheitspapiers, das mit dem Sicherheitselement von Fig. 1 ausgestattet ist. Zur Herstellung des Sicherheitspapiers wird das Sicherheitselement von Fig. 1 durch einen Heißsiegelvorgang bei erhöhtem Druck und erhöhter Temperatur, z. B. bei 140° C, auf die Oberfläche 20 des Sicherheitspapier-Substrats 10 übertragen. Die bei der Übertragung auftretenden Prozesse sind abhängig von der Art der in der Klebstoffschicht enthaltenen Antiblockmittel, der sonstigen Komponenten des Klebstoffs, und gegebenenfalls auch von der Art der Oberflächen 3 und 20. Wärmeaktivierbare Antiblockmittel und durch Druck und/oder Scherung aktivierbare Antiblockmittel werden durch die beim Heißsiegelvorgang auftretende Wärme und die mechanische Einwirkung auf die Klebstoffschicht aktiviert und beginnen zu vernetzen, entweder untereinander oder mit den übrigen Bindemittel-Komponenten des Klebstoffs. Durch Strahlung aktivierbare reaktive Antiblockmittel und übrige Bindemittel-Komponenten werden aktiviert, indem die Klebstoffschicht 4 während des Heißsiegelvorgangs oder unmittelbar danach mit einer geeigneten Strahlungsquelle bestrahlt wird. Dadurch wird ebenfalls die Vernetzungsreaktion in der Klebstoffschicht 4 in Gang gesetzt. Alternativ kann die Aktivierung durch Bestrahlung auch unmittelbar vor dem Heißsiegelvorgang erfolgen. Dies empfiehlt sich nur bei langsam härtenden Klebstoffsystemen, beispielsweise bei kationisch härtenden Klebstoffsystemen.

Die Vernetzungsreaktion, oder auch ein Aufschmelzen und eine gute Verträglichkeit der Antiblockmittel mit den übrigen Klebstoffkomponenten, führt dazu, dass die reaktiven Antiblockmittel in der Klebstoffschicht 4 "verschwinden", d. h. es liegen keine in irgendeiner Weise, beispielsweise durch Trübung der Schicht, erkennbare Pulverpartikel mehr vor. Vielmehr entsteht eine hochgradig transparente Klebstoffschicht 4.

Außerdem können die reaktiven Antiblockmittel und/ oder die übrigen Klebstoffkomponenten bevorzugt mit reaktiven Oberflächengruppen an den Oberflächen 3 des Sicherheitselement-Schichtaufbaus 2 und 20 des Sicherheitspapier-Substrats 10 reagieren. Dies führt zu einer sehr hohen Haftkraft der Klebstoffschicht 4 an den Oberflächen 3 und 20 und damit zu einer äußerst beständigen und fälschungssicheren Verbindung zwischen dem Sicherheitselement 1 und dem Sicherheitspapier-Substrat 10.

Fig. 3 zeigt eine schematische Querschnittsdarstellung eines Sicherheitspapiers wie in Fig. 2, wobei das Sicherheitselement 1 jedoch mit einer weiteren Klebstoffschicht 5, die sich zwischen dem SicherheitselementSchichtaufbau 2 und der Klebstoffschicht mit reaktivem Antiblockmittel 4 befindet, ausgestattet ist. Bei der Klebstoffschicht 5 handelt es sich beispielsweise um eine Klebstoff-Zusammensetzung, die mit der Klebstoff-Zusammensetzung zur Ausbildung der Klebstoffschicht 4 identisch ist, oder um eine andere, bevorzugt strahlenvernetzbare, Klebstoff-Zusammensetzung.

Die Klebstoffschicht 5 wird auf die Verklebungsfläche 3 des Sicherheitselement-Schichtaufbaus 2 aufgetragen und vernetzt, beispielsweise durch eine geeignete Strahlung. Anschließend wird die Klebstoffschicht 4 mit reaktiven Antiblockmittel aufgetragen und verfahren wie im Zusammenhang mit Fig. 2 erläutert. Die Ausbildung einer solchen zweilagigen Beschichtung kann dann empfehlenswert sein, wenn es sich bei der Verklebungsfläche 3 um eine sehr verklebungsfeindliche Oberfläche handelt, oder sie kann anstelle eines Primers vorgesehen werden.

Fig. 4 zeigt eine schematische Querschnittsdarstellung einer Ausweiskarte, die mit einem erfindungsgemäßen Sicherheitselement 1 ausgestattet ist. In diesem Fall befindet sich auf beiden Oberflächen des Schichtaufbaus 2 eine Klebstoffschicht 4, 4'. Der beidseitig mit Klebstoff beschichtete Sicherheitselementschichtaufbau 2 wird zwischen zwei Kartensubstrate 10, 10' (typischerweise Polymersubstrate) einlaminiert. Beim Laminieren unter erhöhtem Druck und erhöhter Temperatur, gegebenenfalls über eine relativ lange Zeit, wird der Klebstoff mit dem latent reaktiven Antiblockmittel aktiviert. In der Folge wird der vorher in der Regel trübe Klebstoff transparent, was optisch vorteilhaft ist, und idealerweise vernetzen Klebstoff und latent reaktives Antiblockmittel nicht nur untereinander, sondern auch mit den Substraten 10, 10', was eine höhere Spaltfestigkeit und somit eine bessere Beständigkeit und Haltbarkeit der Karte bewirkt. Beispielsweise sind derartige Karten sehr knickfest. Analog können auch Sicherheitsfäden und Sicherheitsbänder in Wertdokumente wie Banknoten und Folienverbundbanknoten einlaminiert werden.

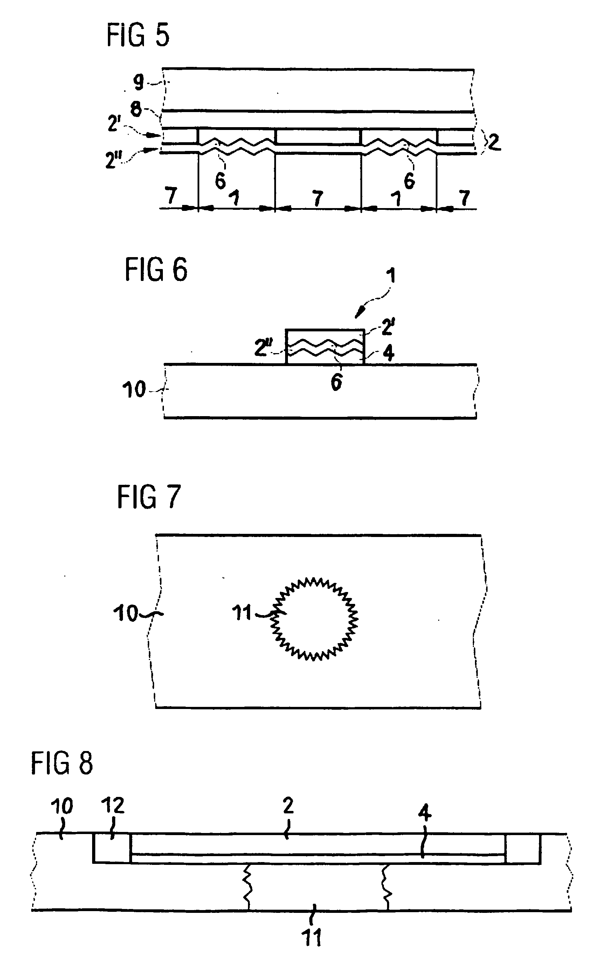

Fig. 5 zeigt einen Ausschnitt aus einem Transferband mit erfindungsgemäßen Sicherheitselementen 1 in schematischer Querschnittsdarstellung. Die Sicherheitselemente 1 haben einen Schichtaufbau 2, der aus einer Prägelackschicht 2' mit Beugungsstrukturen 6 und einer reflektierenden Schicht 2" besteht. Die Prägelackschicht ist über eine Trennschicht 8 mit einer Transferelement-Trägerfolie 9 verbunden. Die Prägelackschicht 2' besteht in der gezeigten Ausführungsform aus einem UV-härtbaren Prägelack, der durch eine Maske hindurch dergestalt mit UV-Strahlung bestrahlt wird, dass die Prägelackschicht nur in den Bereichen mit Beugungsstrukturen gehärtet wird. Diese Bereiche bilden jeweils die Sicherheitselemente 1. Die Zwischenbereiche 7 bleiben weich und schmelzbar, wodurch ein kantenscharfes Herausschmelzen beim Übertragen des Sicherheitselements auf ein Sicherheitspapier oder ein Wertdokument möglich wird. Auf die reflektierende Schicht 2" wird die Klebstoffschicht 4 (hier nicht gezeigt) aufgetragen.

Fig. 6 zeigt eine schematische Querschnittsdarstellung eines Sicherheitspapiers mit einem Sicherheitelement 1, wie es in Fig. 5 dargestellt ist. Das Sicherheitselement 1 ist mittels einer Klebstoffschicht 4 mit reaktiven Antiblockmitteln mit dem Sicherheitspapier-Substrat 10 verklebt. Hier werden bevorzugt reaktive Antiblockmittel verwendet, die durch mechanische Einwirkung wie Druck oder Scherung und/ oder durch Wärmeeinwirkung aktiviert werden. Im Falle einer Verwendung von Antiblockmitteln, die in derselben Weise für chemische Reaktionen aktiviert werden, in der die Vernetzung des Prägelacks 2' initiiert wird, darf die Klebstoffschicht 4 erst nach dem Entfernen der nicht gehärteten Zwischenbereiche 7 aktiviert werden.

Fig. 7 zeigt ein Wertdokument mit einem Substrat 10, beispielsweise eine Banknote, das mit einer durchgehenden Öffnung 11 ausgestattet ist, in Aufsicht. Die Öffnung 11 ist ausgestanzt oder papiermacherisch oder vorzugsweise durch Laserschnitt hergestellt. Die maschinelle Herstellung derartiger Fensteröffnungen 11 ist in der DE 101 63 381 A1 beschrieben.

Fig. 8 zeigt einen Querschnitt des in Fig. 7 dargestellten Wertdokuments mit dem Unterschied, dass die Öffnung 11 durch ein erfindungsgemäßes Sicherheitselement verschlossen ist. Das Sicherheitselement weist einen Schichtaufbau 2 und eine Klebstoffschicht 4 mit reaktiven Antiblockmitteln auf.

Das Sicherheitselement 1 ist vorzugsweise in einer Vertiefung 12 angeordnet, die das Fenster 11 umgibt. Die Vertiefung 12 kann durch nachträgliches Kalandrieren der Papierbahn erzeugt werden, d. h. durch Komprimierung der Papierfasern. Alternativ kann die Vertiefung 12 auch durch eine tatsächliche Verringerung der Papierdicke in diesem Bereich erzeugt werden. Dies geschieht am einfachsten direkt während der Herstellung der Papierbahn, indem die Blattbildung in diesem Bereich durch entsprechende Ausbildung des Siebs dünner ausgeführt wird.

Das Sicherheitselement 1 wird durch Heißsiegeln vermittels der Klebstoffschicht 4 mit reaktivem Antiblockmittel mit dem Substrat 10 des Wertdokuments verklebt. Wie aus Fig. 8 unmittelbar ersichtlich ist, kann das Sicherheitselement 1 nicht vollflächig, sondern nur in einem die durchgehende Öffnung 11 umgebenden Randbereich mit dem Wertdokument-Substrat 10 verklebt werden. Die Haftung des Sicherheitselements muss daher durch eine kleine Verklebungsfläche gewährleistet werden, weshalb eine haftfeste und beständige Verbindung in diesem Falle von besonderer Wichtigkeit ist. Ebenfalls aus Fig. 8 unmittelbar ersichtlich ist, dass sich die Klebstoffschicht 4 über die durchgehende Öffnung 11 hinweg erstreckt. Sicherheitselemente, die über durchgehenden Öffnungen angebracht werden, sind typischerweise transparent, um Durchlicht-Effekte betrachten zu können. Es ist daher von besonderer Wichtigkeit, dass die Klebstoffschicht 4 von hoher Transparenz ist, da Trübungen, wie sie durch konventionelle Antiblockmittel hervorgerufen werden, sofort auffallen und die beobachteten Effekte stören. Die erfindungsgemäßen Sicherheitselemente, die eine Klebstoffschicht mit reaktivem Antiblockmittel aufweisen, sind daher ganz besonders vorteilhaft zur Abdeckung durchgehender Öffnungen bzw. Fenster in Wertdokumenten, wie beispielsweise Banknoten, geeignet.

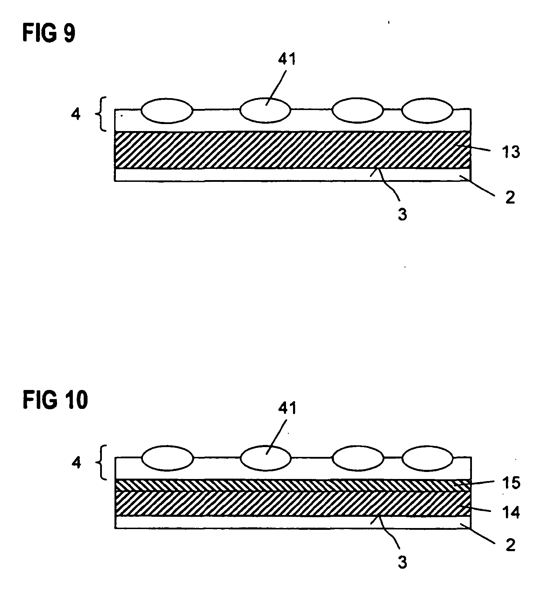

Fig. 9 zeigt eine schematische Querschnittsdarstellung eines KlebschichtSystems gemäß einer bevorzugten Ausgestaltung des erfindungsgemäßen Sicherheitselements. Das Klebschicht-System umfasst neben einer Klebstoffschicht 4 mit reaktivem Antiblockmittel 41 eine weitere Klebstoffschicht 13, bei der es sich um eine mittels Strahlung zumindest vorvernetzte Schicht handelt. Die Schicht 13 wird bevorzugt vor dem Auftragen der Klebstoffschicht 4 mit reaktivem Antiblockmittel 41 auf die zu verklebende Fläche 3 des Sicherheitselements aufgebracht und mittels Strahlung soweit vernetzt, dass ein mit der Gefahr des Haftungsverlusts durch Entnetzen verbundenes späteres Aufschmelzen ausgeschlossen wird, trotzdem aber noch eine gute Überdruckbarkeit gegeben ist. Zur Herstellung eines erfindungsgemäßen Sicherheitselements wird die zusätzliche, mittels Strahlung zumindest vorvernetzte Klebstoffschicht 13 mit der Klebstoffschicht 4 mit reaktivem Antiblockmittel 41 überschichtet. Die Klebstoffschicht 4 mit reaktivem Antiblockmittel 41 wird dann lediglich physikalisch getrocknet, um Tackfreiheit zu erzielen und gleichzeitig die Schmelzbarkeit zu erhalten.

Fig. 10 zeigt eine schematische Querschnittsdarstellung eines KlebschichtSystems einer weiteren bevorzugten Ausgestaltung des erfindungsgemäßen Sicherheitselements. Das Klebschicht-System umfasst neben einer ersten Klebstoffschicht 14, die kein reaktives Antiblockmittel enthält, eine harte Zwischenschicht 15 mit einer Dicke von etwa 1 µm und eine zweite Klebstoffschicht 4 als "Grenzschicht", die ein reaktives Antiblockmittel 41 enthält.

## Patentansprüche

1. Verfahren zur Herstellung eines Sicherheitspapiers oder eines Wertdokuments, umfassend das Ausstatten eines Sicherheitspapier- oder eines Wertdokument-Substrats (10, 10') mit einem Sicherheitselement (1), wobei das Sicherheitselement (1) mindestens eine Verklebungsfläche (3), die mit mindestens einer Klebstoffschicht (4, 4') beschichtet ist, aufweist, der Klebstoff als eine Komponente mindestens ein pulverförmiges Antiblockmittel, und optional mindestens eine weitere filmbildende Komponente enthält, **dadurch gekennzeichnet, dass** das Antiblockmittel durch Wärme und/ oder Strahlung und/oder mechanische Einwirkung und/ oder Lösungsmitteleinwirkung aktiviert werden kann und nach der Aktivierung in der Lage ist, mit einer Komponente des Klebstoffs und/ oder mit sich selbst eine chemische Reaktion einzugehen und das Antiblockmittel selbstvernetzend ist und/ oder mit mindestens der weiteren filmbildenden Komponente des Klebstoffs vernetzt.

2. Verfahren nach Anspruch 1, **dadurch gekennzeichnet, dass** der Klebstoff als weitere filmbildende Komponente mindestens eine physikalisch filmbildende Komponente enthält.

3. Verfahren nach einem der Ansprüche 1 oder 2, **dadurch gekennzeichnet, dass** der Klebstoff einen bei Raumtemperatur festen oder flüssigen, thermisch aktivierbaren Vernetzer enthält, der mit der physikalisch filmbildenden Komponente reagieren kann, oder als weitere filmbildende Komponente mindestens eine strahlenvernetzbare Komponente enthält, bei mehrschichtigen Klebstoffaufbauten in mindestens einer weiteren Schicht, nicht nur der Schicht mit dem Antiblockmittel.

4. Verfahren nach einem der Ansprüche 1 bis 3, **dadurch gekennzeichnet, dass** die chemische Reaktion eine Polymerisation oder eine Polyaddition oder eine Polykondensation ist.

5. Verfahren nach Anspruch 4, **dadurch gekennzeichnet, dass** die chemische Reaktion radikalisch oder ionisch oder thermisch oder durch Lichtstrahlung oder durch Elektronenstrahlung oder durch eine Ringöffnung ausgelöst wird.

6. Verfahren nach einem der Ansprüche 1 bis 5, **dadurch gekennzeichnet, dass** das Antiblockmittel ein duroplastischer Pulverlack oder ein thermoplastischer Pulverlack oder ein Isocyanat ist, wobei der Pulverlack oder das Isocyanat temporär inaktiviert, d. h. latent reaktiv, ist.

7. Verfahren nach einem der Ansprüche 1 bis 6, **dadurch gekennzeichnet, dass** die Klebstoffschicht (4, 4') auf einer harten Zwischenschicht (15) aufgebracht ist, die bevorzugt aus einem Thermoplast gebildet ist, und die Zwischenschicht (15) über eine kein Antiblockmittel enthaltende Klebstoffschicht (14) auf der Verklebungsfläche (3) des Sicherheitselements (1) aufgebracht ist, wobei die Klebstoffschicht (14) andere latent reaktive Vernetzer enthalten kann.

## Claims

1. A method for producing a security paper or a value document, comprising the furnishing of a security paper substrate or of a value document substrate (10, 10') with a security element (1), wherein the security element (1) has at least one bonding area (3) coated with at least one adhesive layer (4, 4'), the adhesive has as a component at least one anti-blocking agent in powder form, and optionally at least one further film-forming component, **characterized in that** the anti-blocking agent can be activated through heat and/ or radiation and/ or mechanical action and/ or solvent action, and after activation is able to undergo a chemical reaction with a component of the adhesive and/ or with itself, and the anti-blocking agent is self-crosslinking and/ or crosslinks with at least the further film-forming component of the adhesive.

2. The method according to claim 1, **characterized in that** the adhesive has, as further film-forming component, at least one physically film-forming component.

3. The method according to any of the claims 1 or 2, **characterized in that** the adhesive contains a thermally activatable crosslinker which is solid or liquid at room temperature and which can react with the physically film-forming component, or contains as further film-forming component at least one radiation-crosslinkable component, in multilayer adhesive constructions in at least one further layer, not only the layer with the anti-blocking agent.

4. The method according to any of the claims 1 to 3, **characterized in that** the chemical reaction is a polymerization or a polyaddition or a polycondensation.

5. The method according to claim 4, **characterized in that** the chemical reaction is triggered radically or ionically or thermally or through light radiation or through electron radiation or through a ring opening.

6. The method according to any of the claims 1 to 5, **characterized in that** the anti-blocking agent is a thermosetting powder lacquer or a thermoplastic powder lacquer or an isocyanate, wherein the powder lacquer or the isocyanate is temporarily inactivated, i.e. latently reactive.

7. The method according to any of the claims 1 to 6, **characterized in that** the adhesive layer (4, 4') is applied to a hard intermediate layer (15) that is preferably formed of a thermoplastic material, and the intermediate layer (15) is applied via an adhesive layer (14) not containing any anti-blocking agent on the bonding area (3) of the security element (1), wherein the adhesive layer (14) can contain other latently reactive crosslinkers.

## Revendications

1. Procédé de fabrication d'un papier de sécurité ou d'un document de valeur, comprenant l'équipement d'un substrat (10, 10') de papier de sécurité ou de document de valeur avec un élément de sécurité (1), l'élément de sécurité comportant au moins une surface de collage (3) revêtue d'au moins une couche de colle (4, 4'), la colle contenant en tant qu'un composant au moins un agent anti-bloquant pulvérulent et en option au moins un autre composant filmogène, **caractérisé en ce que** l'agent anti-bloquant peut être activé par la chaleur et/ou par rayonnement et/ou par action mécanique et/ou par action de solvants et est après l'activation en état d'entrer en réaction chimique avec un composant de la colle et/ou avec lui-même et **en ce que** l'agent anti-bloquant est auto-réticulant et/ou réticule avec au moins l'autre composant filmogène de la colle.

2. Procédé selon la revendication 1, **caractérisé en ce que** la colle contient en tant qu'autre composant filmogène au moins un composant physiquement filmogène.

3. Procédé selon une des revendications 1 ou 2, **caractérisée en ce que** la colle contient un réticuleur thermiquement activable solide ou fluide à température ambiante qui peut réagir avec le composant physiquement filmogène, ou contient en tant qu'autre composant filmogène au moins un composant réticulable par rayonnement, au moins dans une autre couche dans le cas de structures de colle multicouches, pas seulement dans la couche contenant l'agent anti-bloquant.

4. Procédé selon une des revendications de 1 à 3, **caractérisée en ce que** la réaction chimique est une polymérisation ou une polyaddition ou une polycondensation.

5. Procédé selon la revendication 4, **caractérisé en ce que** la réaction chimique est déclenchée radicalement ou ioniquement ou thermiquement ou par rayonnement lumineux ou par rayonnement d'électrons ou par ouverture de cycle.

6. Procédé selon une des revendications de 1 à 5, **caractérisée en ce que** l'agent anti-bloquant est un vernis en poudre duroplastique ou un vernis en poudre thermoplastique ou un isocyanate, le vernis en poudre ou l'isocyanate étant temporairement inactivé, c'est-à-dire réactif de manière latente.

7. Procédé selon une des revendications de 1 à 6, **caractérisée en ce que** la couche de colle (4, 4') est appliquée sur une couche intermédiaire dure (15) qui consiste de préférence en un thermoplastique, et **en ce que** la couche intermédiaire (15) est appliquée sur la surface de collage (3) de l'élément de sécurité (1) par l'intermédiaire d'une couche de colle (14) ne contenant pas d'agent anti-bloquant, la couche de colle (14) pouvant contenir d'autres réticuleurs réactifs de manière latente.
